# EUROPEAN PATENT APPLICATION

(11) **EP 4 424 478 A1**
(43) Date of publication of application: **04.09.2024**
(21) Application number: 24159434.0
(22) Date of filing: 23.02.2024
(51) Int. Cl.: B25J 19/00

(54) **ACCESSORY MOUNTING SYSTEM FOR A ROBOT**

(30) Priority: 01.03.2023 US 202318116058
(71) Applicant: Universal Robots A/S, 5260 Odense S (DK)
(72) Inventor: Polimeni, Ralph F., 5260 Odense S. (DK)
(74) Representative: Fish & Richardson P.C.

(57) **Abstract**

An example system includes an apparatus (i) configured for connection to a robot or (ii) integrated into the robot. The apparatus includes at least one structure configured for connection to one or more corresponding accessories. The at least one structure includes (i) a protrusion that extends outwardly relative to a surface associated with the robot or (ii) an indentation that extends inwardly relative to the surface associated with the robot. The at least one structure may include one or more faces that are tapered such that each of the one or more faces decreases in width farther away from the surface associated with the robot.

## Description

### TECHNICAL FIELD

This specification describes examples of an accessory mounting system for a robot, such as a robotic arm.

### BACKGROUND

A robot, such as a robotic arm, is configured to control an end effector to interact with the environment. An example end effector is an accessory that the robot uses to perform an operation.

An example robotic arm is a computer-controlled robot that is capable of moving in multiple degrees of freedom. The robotic arm may be supported by a base and may include one or more links interconnected by joints. The joints may be configured to support rotational motion and/or translational displacement relative to the base. A tool flange may be on an opposite end of the robotic arm from the base. The tool flange contains an end effector interface. The end effector interface enables an accessory to connect to the robotic arm. In an example operation, the joints are controlled to position the robotic arm to enable the accessory to implement a predefined operation. For instance, if the accessory is a welding tool, the joints may be controlled to position, and thereafter to reposition, the robotic arm so that the welding tool is at successive locations where welding is to be performed on a workpiece. The end effector interface is generally limited to connecting to a single accessory.

### SUMMARY

An example system includes an apparatus (i) configured for connection to a robot or (ii) integrated into the robot. The apparatus includes at least one structure configured for connection to one or more corresponding accessories. The at least one structure includes (i) a protrusion that extends outwardly relative to a surface associated with the robot or (ii) an indentation that extends inwardly relative to the surface associated with the robot. The at least one structure may include one or more faces that are tapered such that each of the one or more faces decreases in width farther away from the surface associated with the robot. The example system may include one or more of the following features, either alone or in combination.

The robot may include an end effector interface configured to connect to an end effector. The at least one structure may be adjacent to the end effector interface. The at least one structure may include a protrusion that is configured to mate to a feature on an accessory among the accessories. The at least one structure may include an indentation that is configured to mate to a feature on an accessory among the accessories.

The apparatus may be configured for connection to the robot. The apparatus may include a collar that fits around at least part of the robot. The collar may include the structures. The collar may include multiple parts. Each of the multiple parts may include an interface for connection to another one of the multiple parts. The apparatus may be integrated into the robot such that the structures are part of a link or joint included in the robot.

The at least one structure comprising the protrusion may have a pyramidal shape. The pyramidal shape may have three or more faces. The at least one structure comprising the indentation may have an inverse pyramidal shape. The inverse pyramidal shape may have three or more faces.

The robot may include a first end effector interface configured to connect to an end effector. The apparatus may include a connection interface configured to connect to the end effector interface. The apparatus may include a second end effector interface having a same configuration as the first end effector interface. The second end effector interface may be on a different surface of the apparatus than the connection interface. The second end effector interface may be on an opposite surface of the apparatus than the connection interface.

The at least one structure may include (i) a protrusion that extends outwardly from a surface associated with the robot or (ii) an indentation that extends inwardly relative to the surface associated with the robot. The at least one structure may include faces that are tapered such that each of the faces decreases in width farther away from the surface associated with the robot.

The apparatus may include a first apparatus. The at least one structure may include first structures. The accessories may include first accessories. The surface associated with the robot may include a first surface. The one or more faces may be first faces. The system may include one or more additional apparatus (i) configured for connection to the robot or (ii) integrated into the robot. The one or more additional apparatus may each include second structures configured for connection to one or more corresponding second accessories. Each of the second structures may include (i) a protrusion that extends outwardly relative to a second surface associated with the robot or (ii) an indentation that extends inwardly relative to the second surface associated with the robot. Each of the second structures may include one or more second faces that are tapered such that each of the one or more second faces decreases in width farther away from the second surface associated with the robot. The one or more additional apparatus may be (i) configured for connection to (ii) or integrated into one or more respective robot links or joints. The one or more respective robot links or joints may be different from a robot link or joint adjacent to the end effector interface.

The apparatus may be rotatable based on rotation of a robot joint. The apparatus may be three-dimensionally (3D) printed, die-cast, or machined.

An example robotic system includes a robot and an apparatus (i) configured for connection to the robot or (ii) integrated into the robot. The apparatus may include one or more structures configured for connection to one or more corresponding accessories. Each of the one or more structures may include (i) a protrusion that extends outwardly relative to a surface associated with the robot or (ii) an indentation that extends inwardly relative associated with the surface associated with the robot. Each of the one or more structures may include one or more faces that are tapered such that each of the one or more faces decreases in width farther away from the surface associated with the robot.

The one or more corresponding accessories may include one or more of: a mechanical gripper, a vacuum gripper, a magnetic gripper, a screwing machine, a reverse screwing machine, welding equipment, gluing equipment, a liquid or solid dispensing system, painting equipment, a visual system, a camera, a scanner, a wire holder, a tubing holder, a belt feeder, or polishing equipment.

The robot may include a robotic arm. The robotic arm may include a base, an end effector, an accessory included among the accessories, where the accessory is connected to one or more of the structures; and links or joints between the base and the end effector. An instance of the apparatus may be connected to, or integrated into, at least one of the links or joints.

The accessory may be a first accessory and the robotic system further include a second structure that attaches to the first accessory to enable stacking a second accessory on the first accessory, the second structure having a pyramidal shape comprised of tapered faces. Ones of the links each may include at least one of the apparatus.

Any two or more of the features described in this specification, including in this summary section, may be combined to form implementations not specifically described in this specification.

At least part of the robots, systems, and techniques described in this specification may be configured or controlled by executing, on one or more processing devices, machine-executable instructions that are stored on one or more non-transitory machine-readable storage media. Examples of non-transitory machine-readable storage media include read-only memory, an optical disk drive, memory disk drive, and random access memory. The robots, systems, techniques, apparatus, and structures described in this specification may be configured, for example, through design, construction, composition, arrangement, placement, programming, operation, activation, deactivation, and/or control.

The details of one or more implementations are set forth in the accompanying drawings and the following description. Other features and advantages will be apparent from the description and drawings, and from the claims.

### DESCRIPTION OF THE DRAWINGS

Fig. 1 is a perspective view of an example system containing an example robot, specifically a robotic arm, having an accessory mount.
Fig. 2 is a side view of the robotic arm of Fig. 1.
Fig. 3A is a perspective view of part of the robotic arm of Fig. 1 including a close-up perspective view of the accessory mount.
Fig. 3B is a close-up side view of part of the robotic arm of Fig. 1 including a close-up side view of the accessory mount.
Fig. 4A is a top view on example structure on an accessory mount having a raised four-sided pyramidal shape.
Fig. 4B is a perspective view of the example structure of Fig. 4A.
Fig. 5 is a cut-away side view of the example structure of Fig. 4A.
Fig. 6A is a top view on example structure on an accessory mount having a raised five-sided pyramidal shape.
Fig. 6B is a perspective view of the example structure of Fig. 6A.
Fig. 7A is a top view on example structure on an accessory mount having a raised six-sided pyramidal shape.
Fig. 7B is a perspective view of the example structure of Fig. 7A.
Fig. 8A is a top view on example structure on an accessory mount having a raised three-sided pyramidal shape.
Fig. 8B is a perspective view of the example structure of Fig. 8A.
Fig. 9A is a top view on example structure on an accessory mount having a raised four-pointed isotoxal star pyramidal shape.
Fig. 9B is a perspective view of the example structure of Fig. 9A.
Fig. 10 is a cut-away side view of an example structure on an accessory mount that is indented relative to a surface associated with a robot.
Fig. 11A is a perspective view of an example accessory mount.
Fig. 11B is an exploded view of the example accessory mount of Fig. 11A, showing a two-piece configuration.
Fig. 11C is a front view of the example accessory mount of Fig. 11A.
Fig. 12 is a side view of an example robotic arm like that of Fig. 1, but that includes three example accessory mounts.
Fig. 13A is a side exploded view of components of an example accessory mount connecting to part of a robotic arm like that of Fig. 1.
Fig. 13B is a perspective exploded view including the components of the example accessory mount of Fig. 13A.
Fig. 13C is a side view of components 5 of an example accessory mount connecting to part of a robotic arm like that of Fig. 1.
Fig. 13D is a side view of components of an example accessory mount connecting to part of a robotic arm like that of Fig. 1.
Fig. 14A is a top view of an example accessory mount having structures that are stacked.
Fig. 14B is a perspective view of the example accessory mount of Fig. 14A with the stacked structures in exploded view.
Fig. 14C is a side view of the example accessory mount of Fig. 14A with the stacked structures in exploded view.
Fig. 14D is a front view of the example accessory mount of Fig. 14A with the stacked structures in exploded view.
Fig. 15 is a perspective view of an example of an accessory support, which holds an accessory, that is connectable to an example accessory mount.
Fig. 16 is a perspective view of another example of an accessory support, which holds an accessory, that is connectable to an example accessory mount.
Fig. 17 is a perspective view of parts of an example laser line scanner connected to an example accessory mount on a robotic arm.

Like reference numerals in different figures indicate like elements

### DETAILED DESCRIPTION

Described herein are examples of an accessory mounting system for a robot. The implementations are described in the context of a robotic arm system; however, the accessory mounting system and its variants described herein are not limited to this context and may be used with any type of robot.

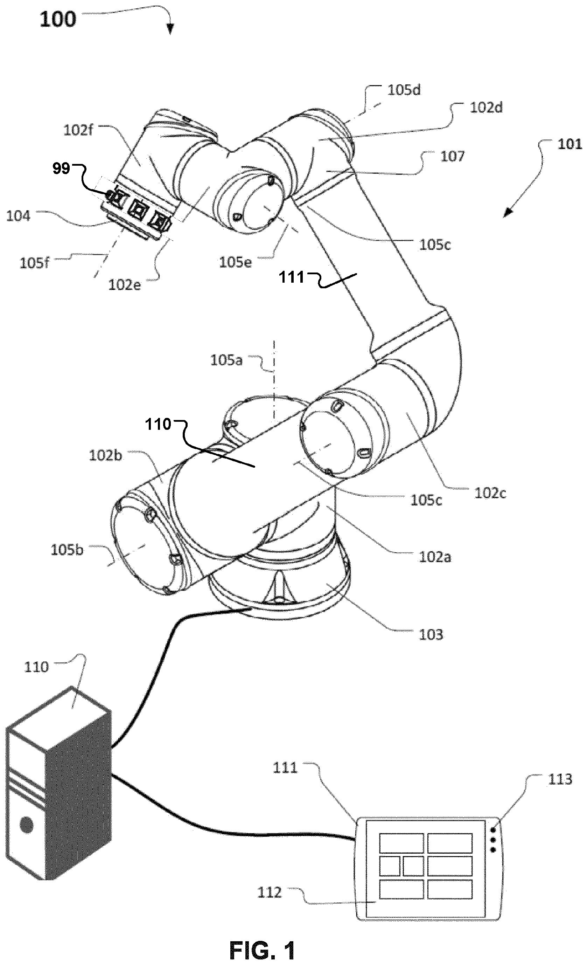

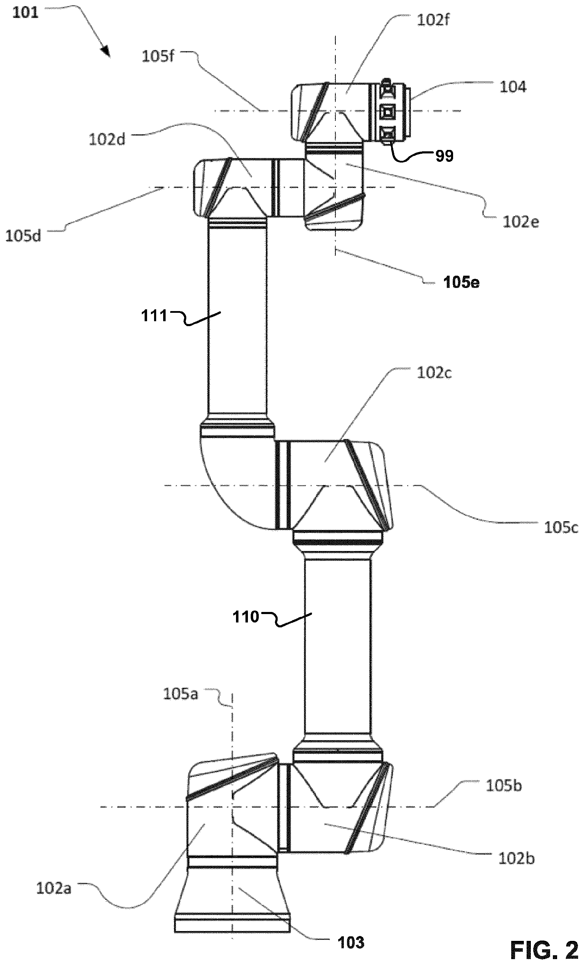

Fig. 1 show an example robotic system ("system") 100 on which an accessory mounting system ("accessory mount") 99 may be implemented. System 100 includes robotic arm ("arm") 101. Arm 101 includes robot joints ("joints") 102a, 102b, 102c, 102d, 102e, and 102f connecting a robot base ("base") 103 and a robot tool flange ("tool flange") 104. Fig. 2 shows arm 101 in a different pose than the pose shown in Fig. 1.

In this example, arm 101 includes six joints; however, other implementations of arm 101 may include fewer than six joints or more than six joints. Example arm 101 is thus a six-axis robot arm having six degrees of freedom enabled by the six rotational joints. The joints in this example include the following: base joint 102a configured to rotate around axis 105a; shoulder joint 102b configured to rotate around axis 105b; elbow joint 102c configured to rotate around elbow axis 105c; first wrist joint 102d configured to rotate around first wrist axis 105d; and second wrist joint 102e configured to rotate around second wrist axis 105e. As noted, the joints in this example also include joint 102f. Joint 102f is a tool joint containing tool flange 104 and is configured to rotate around tool axis 105f.

Arm 101 also includes links 110 and 111. Link 110 is a cylindrical device that connects joint 102b to 102c. Link 111 is a cylindrical device that connects joint 102c to 102d. Other implementations may include more than two links and/or links having non-cylindrical shapes.

In this example, tool flange 104 is on an opposite end of arm 101 from base 103; however, that need not be the case in all robots. Tool flange 104 is rotatable around a tool axis 105f. Tool flange 104 contains an end effector interface. The end effector interface enables an end effector to connect to arm 101 mechanically and/or electrically. To this end, the end effector interface includes a configuration of mechanical and/or electrical contacts and/or connection points to which an end effector may mate and thereby attach to arm 101. An example end effector includes an accessory, such as those described below, configured to interact with the environment.

Examples of accessories - that is, end effectors - that may be connected to the tool flange via the end effector interface include, but are not limited to, mechanical grippers, vacuum grippers, magnetic grippers, screwing machines, reverse screwing machines, welding equipment, gluing equipment, liquid or solid dispensing systems, painting equipment, visual systems, cameras, scanners, wire holders, tubing holders, belt feeders, polishing equipment, and/or others not listed here. One or more of these accessories may connect to/mount on the accessory mount described herein.

Arm 101 includes one or more motors and/or actuators (not shown) associated with the tool flange and each joint and/or link. The one or more motors or actuators are responsive to control signals to cause movement of the tool flange and joints, and thus of arm 101, based on the control signals. For example, the motors and/or actuators may be configured and controlled to control movement of the arm's joints and/or links in order to move the robot tool flange 104 to a particular pose or location in the environment.

As shown in Fig. 1, system 100 also includes a robot controller ("controller") 110 to control operation of arm 101. For example, controller 110 may be configured to output the control signals noted above to control movement, or lack thereof, of arm 101. Controller 110 may include, for example, one or more microcontrollers, one or more microprocessors, programmable logic such as a field programmable gate array (FPGA), one or more application-specific integrated circuits (ASICs), solid state circuitry, or any appropriate combination of two or more of these types of processing devices. In some implementations, controller 110 may include local components integrated into, or at a same site as, arm 101. In some implementations, controller 110 may include remote components that are remote in the sense that they are not located on, or at a same site as, arm 101. In some implementations, controller 110 can include computing resources distributed across a centralized or cloud computing service, at least a portion of which is remote from robotic arm 101. The local components may receive instructions to control arm 101 from the remote or distributed components and control the motors and/or actuators accordingly.

Controller 110 may be configured to control motion of arm 101 by controlling the amount of torque provided to the joints by the motors and/or actuators based on a dynamic model of arm 101, a direction of gravity, signals from sensors (not shown) connected to or associated with each or some of the joints and/or links, and/or a computer program stored in a memory of controller 110. In this regard, the torque output of a motor is the amount of rotational force that the motor develops. The dynamic model may be stored in memory (not shown) of controller 110 and may define a relationship between forces acting on arm 101 and the velocity, acceleration, or other movement, or lack of movement of arm 101 that result(s) from those forces. The dynamic model may include a kinematic model of arm 101, knowledge about inertia of arm 101 and other parameters influencing the movements of arm 101. The kinematic model may define a relationship between the different parts of arm 101 and may include information about arm 101 such as the lengths and/or sizes of the joints and links. The kinematic model may be described by Denavit-Hartenberg parameters or like. The dynamic model may make it possible for controller 110 to determine which torques and/or forces that the motors and/or actuators should provide in order to move joints or other parts of the robotic arm, e.g., at a specified velocity, at a specified, acceleration, or to hold the robot arm in a particular static pose.

Controller 110 may also include, or connect to, an interface device 111. Interface device 111 is configured to enable a user to control and/or to program operations of arm 101 via controller 110. Interface device 111 may be a dedicated device, such as a robotic teach pendent, which is configured to communicate with controller 110 via wired and/or wireless communication protocols. Such an interface device 111 may include a display 112 and a one or more types of input devices 113 such as buttons, sliders, touchpads, joysticks, track balls, gesture recognition devices, keyboards, microphones, and the like. Display 112 may be or include a touch screen acting both as display and input device. Interface device 111 device may be or include a generic computing device (not shown), such as a smartphones, a tablets, or a personal computer including a laptop computer, configured with appropriate programming to communicate with controller 110.

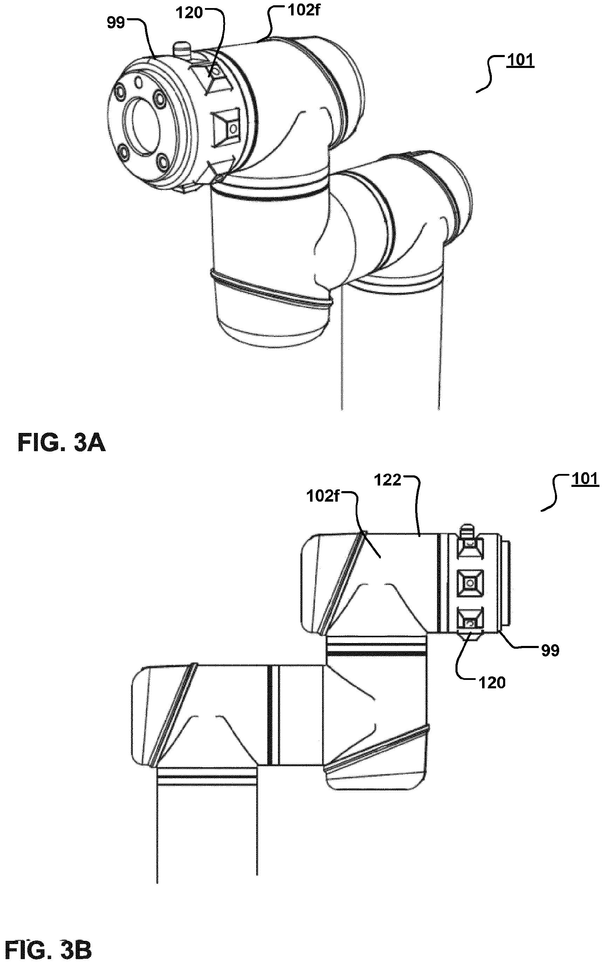

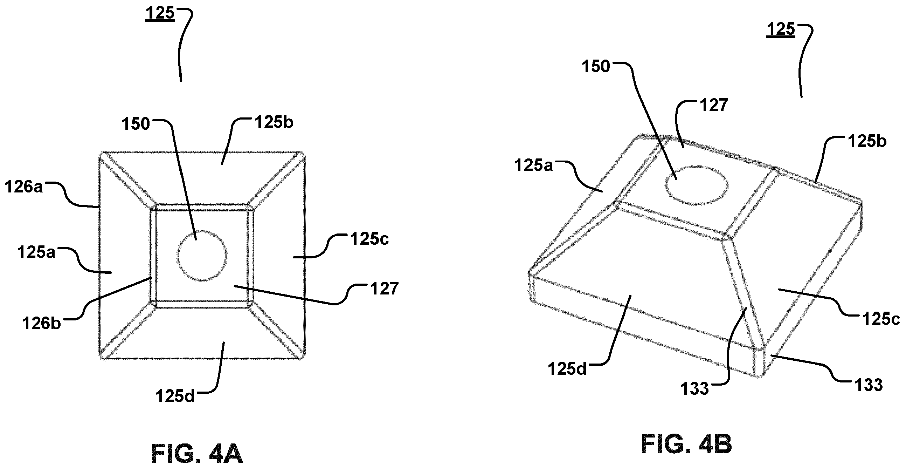

Referring also to the close-up views of Figs. 3A and 3B, accessory mount 99 incudes structures 120 configured for connection to one or more complementary structures on corresponding accessories (not shown). In the example of Figs. 1, 2, 3A and 3B, each structure is a protrusion, or "perch", that is raised - for example, that extends outwardly - relative to a surface associated with the robot, such as surface 122 (Fig. 3B) of a part of arm 101. Referring to Figs. 4A and 4B, taking structure 125 as representative of each structure 120, each of the faces 125a to 125d is in the shape of an isosceles trapezoid. Taking face 125a as representative of each face, the longer base 126a of face 125a is nearest to or adjacent to surface 122 of the arm 101 and the shorter base 126b of face 125 is raised relative to, and farthest from, surface 122 of arm 101.

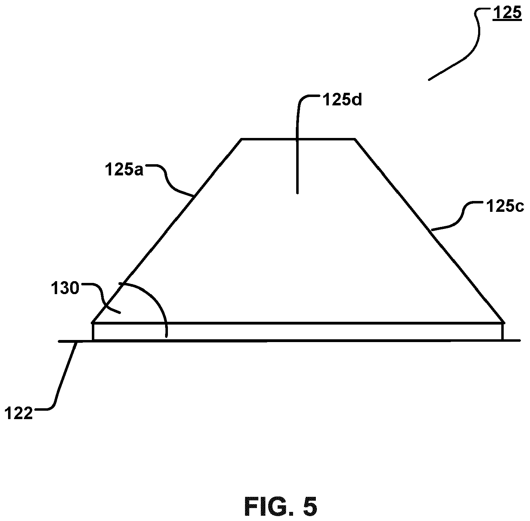

The faces are angled obliquely relative to the surface 122 of robot to intersect with one another and thereby produce a pyramidal structure - in this example, a four-sided pyramidal structure - that is raised relative to surface 122 of arm 101. The four-sided pyramidal structure may also have a top surface 127, which may be flat resulting in a truncated pyramidal structure in this example. Referring also to Fig. 5, the interior angle of each face relative to surface 122 of the robot, such as angle 130 of face 125a, may be between 10° and 50°; however, the structures described herein are not limited to this range of interior angles. Each face of the pyramidal structure is thus angled and tapered such that the faces decreases in width, and the horizontal cross-section of the pyramidal structure decreases in area, progressively farther away from the surface 122 of arm 121.

As shown in Fig. 4B, in some implementations, pyramidal structure 125 may include a rectangular cuboid base 133 and intersections of the faces 125a to 125d, such as intersection 134, may be beveled. In some implementations, these features may be omitted.

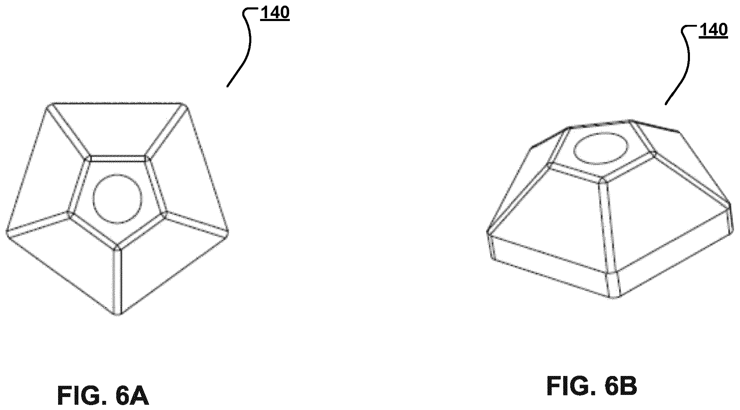

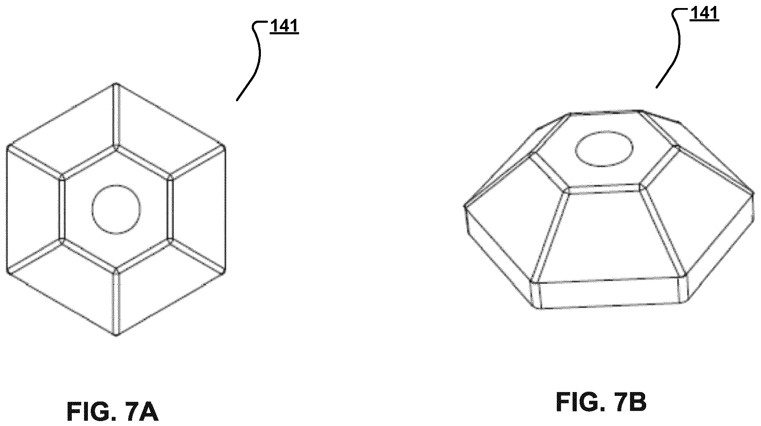

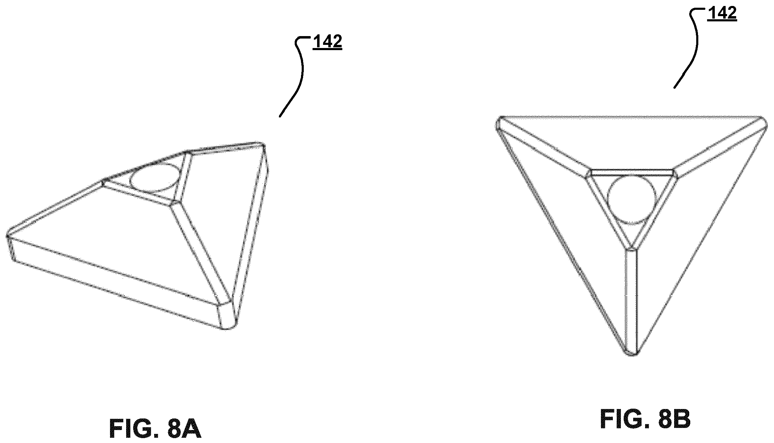

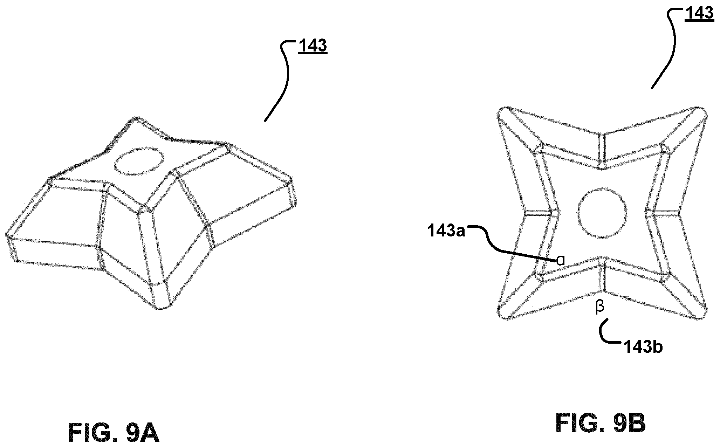

Structures 120 may have shapes that are different than the four-sided pyramids of Figs. 4A, 4B, and 5. For example, Figs. 6A and 6B show a structure 140 having five faces and, thus, a five-sided pentagonal pyramidal structure. For example, Figs. 7A and 7B show a structure 141 having six faces and, thus, a six-sided hexagonal pyramidal structure. For example, Figs. 8A and 8B show a structure having three faces and, thus, a three-sided triangular pyramidal structure. For example, Figs. 9A and 9B show a structure having eight faces and a four-pointed isotoxal star pyramidal structure in which the internal angles 143a, a, of the star are about 45° and the external angles 143b, β, of the star re about 135°. Each of these example structures may also include a raised base and beveled edges, as shown. The structures included in the accessory mount may have shapes other than these shapes. In some implementations, a single accessory mount may have structures having different shapes such as those described herein or others. In some implementations, angles α and β may differ from, respectively, 45°and the 135° as indicated above, so long as the sum of the angles α and β is 180° and angle α is less than 90° and angle β is larger than 90°.

In some implementations, each of the structures may include a connection hole, such as screw hole 150 shown in Figs. 4A and 4B. In this example, hole 150 is a threaded hole configured to receive a screw during connection of an accessory, or a portion thereof, to the structure. In other implementations, the hole need not be threaded and may be configured to receive a plug or other type of connection mechanism.

There may be multiple structures 120 around a circumference of the accessory mount, as shown in Figs. 1, 2, 3A and 3B. In some implementations, there may be two, three, four, five, six, seven, or more structures on or around the circumference of the accessory mount. In some implementations, there may be a single structure on the accessory mount.

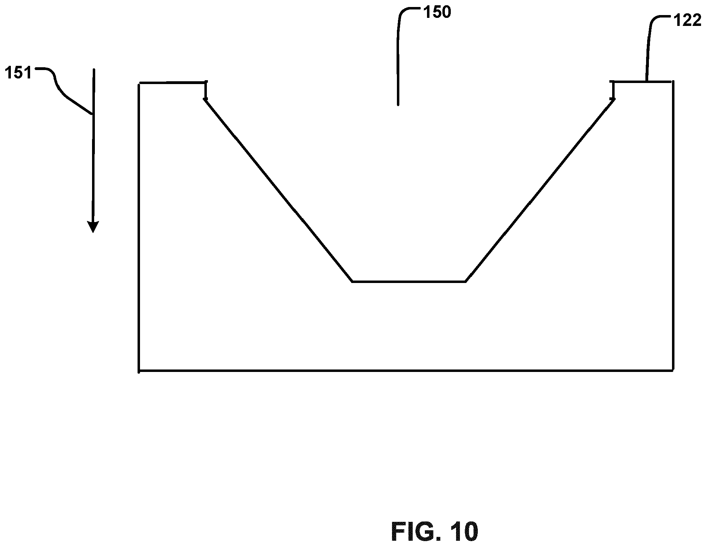

In some implementations, the structures on the accessory mount may be, or include, indentations that extend inwardly relative to a surface 122 of a robot, such as arm 101, and that have a configuration/shape that is complementary to the structures described with respect to Figs. 4A, 4B, 5A, 5B, 6A, 6B, 7A, 7B, 8A, 8B, 9A, and 9B. For example, as shown in Fig. 10, an example indented structure 150 may have an inverted pyramidal structure having faces that are tapered such that the faces decrease in width progressively farther away from the surface 122 of the robot in the direction of arrow 151 and that are angled as described with respect to Fig. 5 relative to surface 122. The indented structures are not limited to complements of the shapes described herein and may have any appropriate structure. The independent structures may receive complementary protruding or raised structures on or associated with an accessory to connect to the accessory.

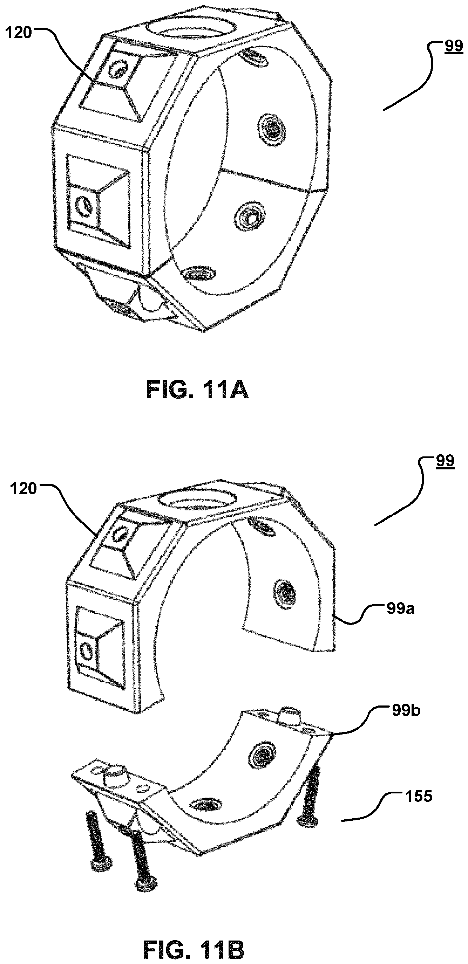

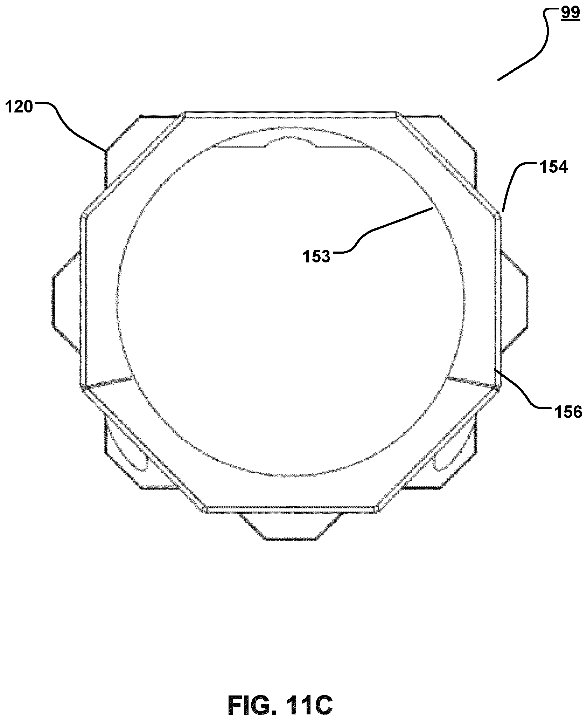

Accessory mount 99 may be connected mechanically to arm 101. Referring to Figs. 11A, 11b, and 11C accessory mount 99 may be configured as a circular collar that attaches to a link or to a joint of arm 101 or, more generally, to any appropriate part of a robot. Although a circular collar is described, the collar may be square, rectangular, triangular, oval, or of any other shape. Referring to Fig. 11C, the collar includes an inner surface 153 that fits adjacent to the link or joint and an outer surface 154 that supports the structures and that is associated with the robot since the collar fits around a robot link. In this example, outer surface 154 includes flat surfaces such as flat surface 156. One or more structures 120 may be on one or more of these flat surfaces. In some implementations, there may be a single structure on each flat surface as shown in the figures, and in some implementations there may be more than one structure on a flat surface. In some implementations, one or more of the flat surfaces may not contain a structure.

Accessory mount 99 may be a separate component from arm 101 that is attached arm 101 using a fastener such one or more screws, one or more clamps, or a combination of these or other fasteners. In example accessory mount 99 shown in Fig. 11B, the accessory mount is configured as a collar comprised of two pieces 99a and 99b. As shown in Figs. 11A and 11B, the two pieces align at screw holes and fasten together using four screws 155. For example, pieces 99a and 99b may be fit around a link of arm 101 and fastened together using the screws to hold the accessory mount on arm 101. In some implementations, the collar may include three or more pieces.

Accessory mount 99 may be integrated into arm 101. For example, accessory mount may be part of arm 101 and formed when arm 101 is formed. In an example, arm 101 - or a portion thereof, such as a joint or a link containing the accessory mount - may be formed using processes such as three-dimensional (3D) printing, machining, and/or die-casting. During the formation process, the accessory mount is formed as a non-separable appendage of the arm's structure or the part's structure. The accessory mount may be made of polymer, metal, or any other appropriate material.

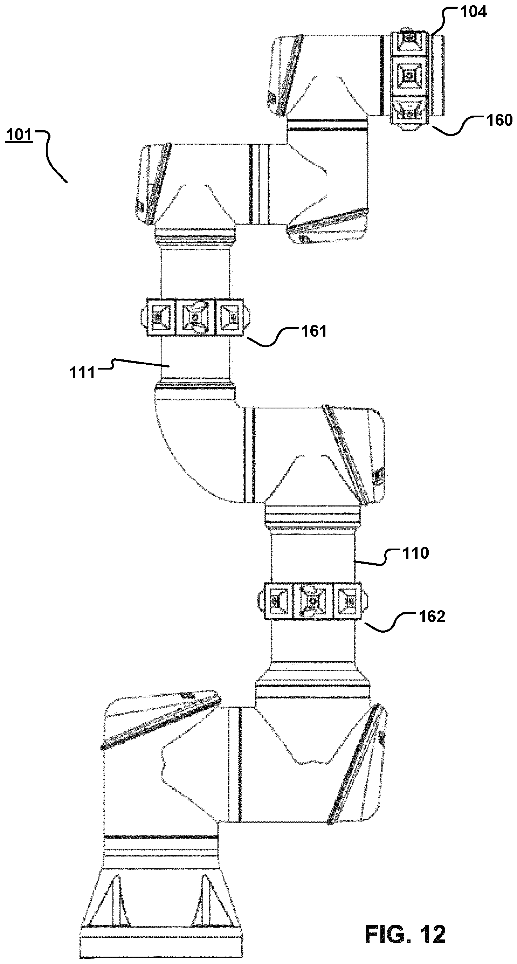

An accessory mount of the type described herein may be incorporated into one or more parts of a robot. For example, as shown in Figs. 1, 2, 3A and 4B, accessory mount 99 may be incorporated into tool flange 104 adjacent to, or connected to, the end effector interface. In the example shown, accessory mount 99 is around tool flange 104, leaving the end effector interface open and available for connection to an end effector. In another example, as shown in Fig. 12, accessory mounts 160, 161, and 162 which are the same as, or variants of, accessory mount 99, may be incorporated into tool flange 104 and into links 111 and 110, respectively of arm 101. In this regard, a single link may include none, one, two, three, or more accessory mounts. One or more accessory mounts may also be incorporated into one or more respective joints. A robot, such as arm 101, may include any number of accessory mounts that is appropriate for its size and configuration.

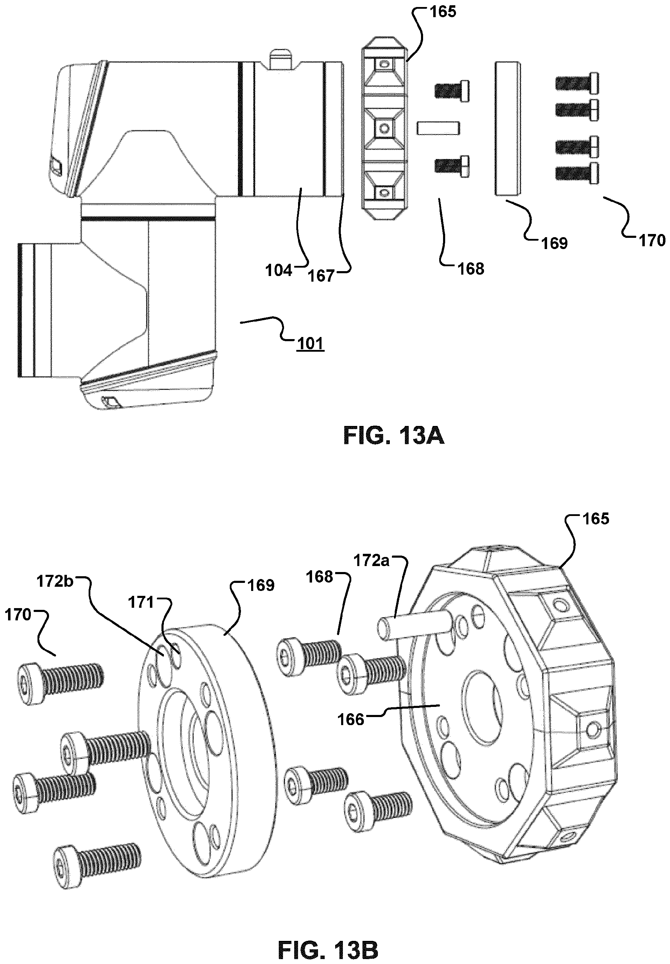

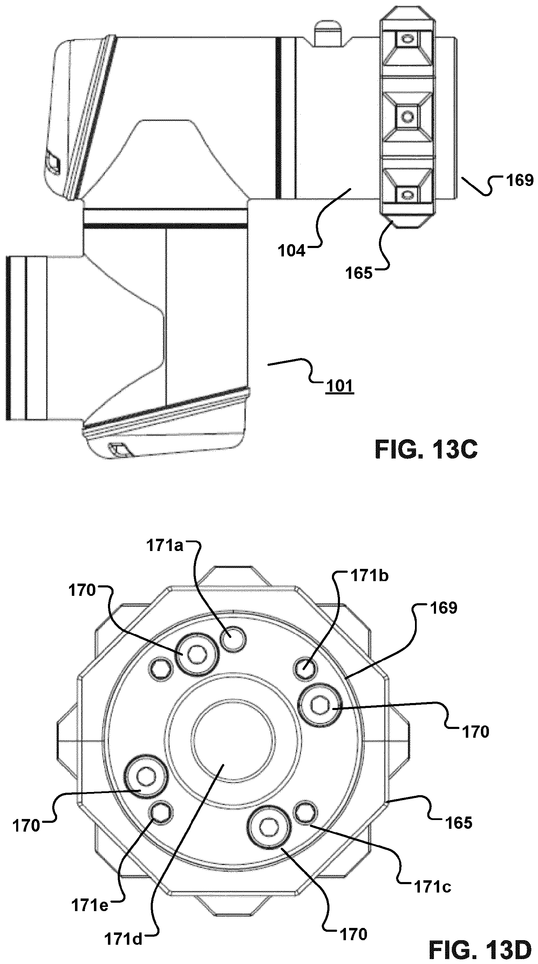

Referring to Figs. 13A, 13, 13C, and 13D, in some implementations, an accessory mount 165 which is the same as, or a variant of, accessory mount 99, is connected to the end effector interface, e.g., rather than around tool flange 104 as described above. The structures of accessory mount 165 protrude or are indented relative to its surface, which is associated with the robot by virtue of connection of accessory mount 165 to the end effector interface. In some implementations, accessory mount 165 may include a connection interface 166 configured to connect to the end effector interface 167, e.g., using screws 168 or any of the other types of fasteners described herein. In this example configuration, end effector interface 167 may be blocked or inaccessible or unusable by the presence of accessory mount 165 connected in this manner. To address this, as shown in Figs. 13A to 13D, accessory mount 165 may include, or attach to, a second end effector interface 169 having a connection configuration that is the same as that of the end effector interface of tool flange 104. In an example, the connection configuration includes holes and/or other types of mechanical interfaces 171 (e.g., 171a to 171e of Fig. 13D) to which an end effector connects to the tool flange. Second end effector interface 169 is on a different - for example, opposite - surface of the accessory mount than the connection interface 166 that connects to end effector interface 167. Second end effector interface 169 may connect to the accessory mount via screws 170 as shown or other types of fasteners as described herein. In some implementations, second end effector interface 169 may be an integral part of the accessory mount and, therefore, not require fasteners for connection.

A locator pin 172a on accessory mount 165 mates to a corresponding hole 172b on end effector interface 169 to ensure that the two are in proper position relative to each other.

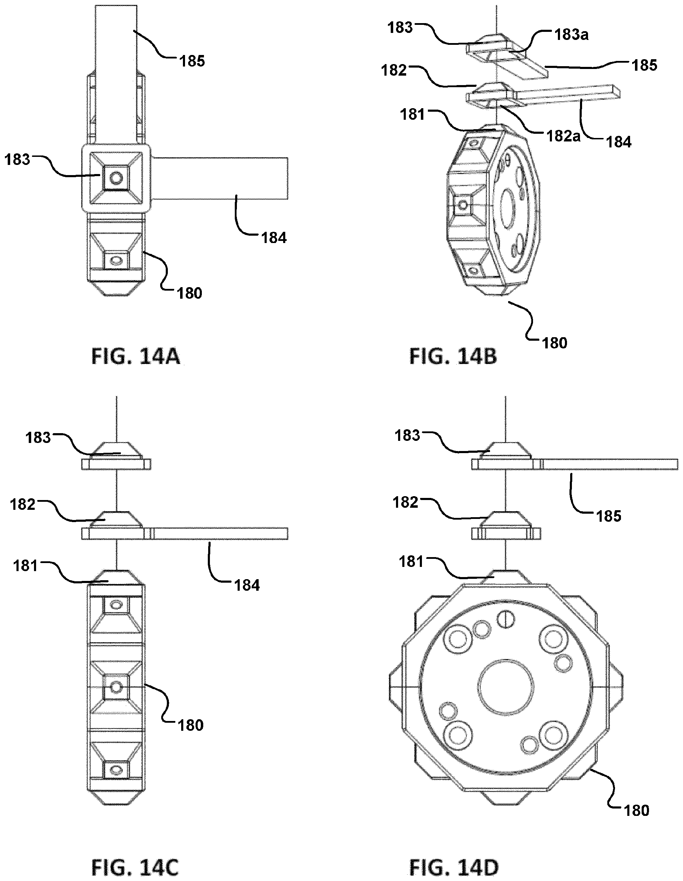

Referring to Figs. 14A, 14b, 14C, and 14D, in some implementations, an accessory mount 180, which is a variation of accessory mount 99, may include two, three, four, or more structures 181, 182, and 183 that fit one on top of the other, i.e., that are stackable, and that enable stacking of multiple accessories. For example, each structure 182, 183 may have a receptacle 182a, 183a, respectively, that has a shape that is complementary to, and configured to receive, the raised pyramidal shape of a pyramidal structure. For example structure 181 may receive and support a structure 181] Structure 182 holds a first accessory (not shown) at accessory support 184. For example structure 182 may receive and support a structure 183. Structure 183 holds a second accessory (not shown) at accessory support 185. Structures 182 and 183 may have any of the shapes described herein and receptacles 182a and 183a, respectively, may have shapes that are complementary to the shapes of the structures, thereby enabling the stacking. Fewer than two, or more than two structures may be in a single stack.

The accessory mount, and accessories held thereon, may move with movement of the robot. For example, an accessory mount on the tool flange or end effector interface may rotate with the tool flange or end effector interface, causing accessories thereon also to rotate.

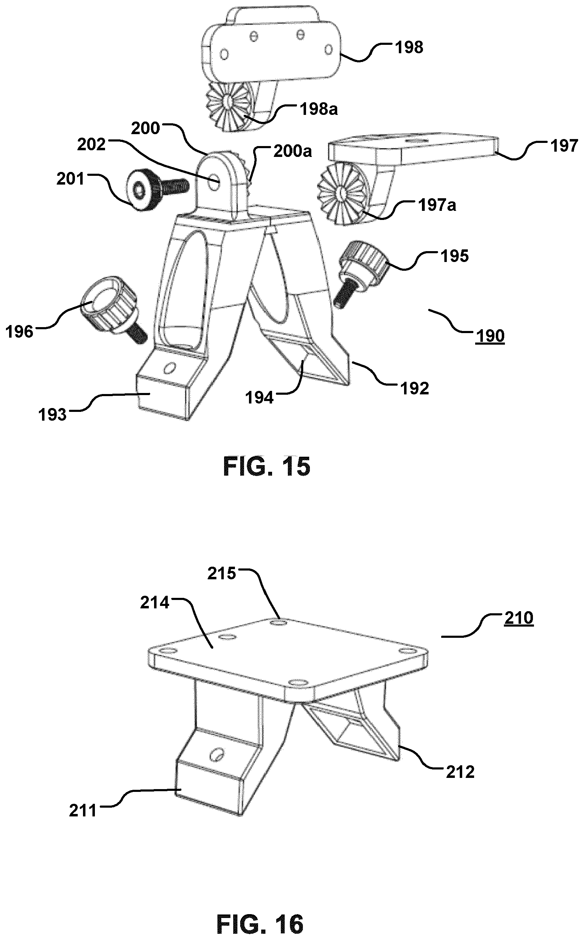

Figs. 15 and 16 show examples of accessory supports, which hold or support an accessory (not shown), configured to interface to the accessory mounts described herein. In Fig. 15, accessory support 190 includes two contacts 192, 193 having receptacles, such as receptacle 194, that are complementary to the shape of raised pyramidal structures on an accessory mount of the type described herein. As shown in Fig. 15, accessory support 190 is secured to pyramidal structures of an accessory mount using screws 195, 196, which fit into the connection holes on contacts 192, 193 and into connection holes on respective pyramidal structures to which the contacts mate/fit over. In this example, accessory support 190 includes interchangeable features 197 and 198, which connect to flange 200 via screw 201 and hole 202 to support an accessory (not shown). Teeth 197a, 197b on respective features 197, 198 are complementary to, and mate with, teeth 200a on feature 200. The teeth may prevent unwanted rotation of the accessory, e.g., during robot movement. Accessory support 190 includes two contacts 192, 193 and corresponding receptacles to enable mating to two pyramidal structures. In other implementations, the accessory support may a single contact or more than two contacts.

In the example of Fig. 16, accessory support 210 includes two contacts 211 212 and corresponding receptacles to enable mating to two pyramidal structures in the same manner as described above with respect to accessory support 190. In this example, feature 214 is a planar surface having holes, such as hole 215, to which an accessory may attach.

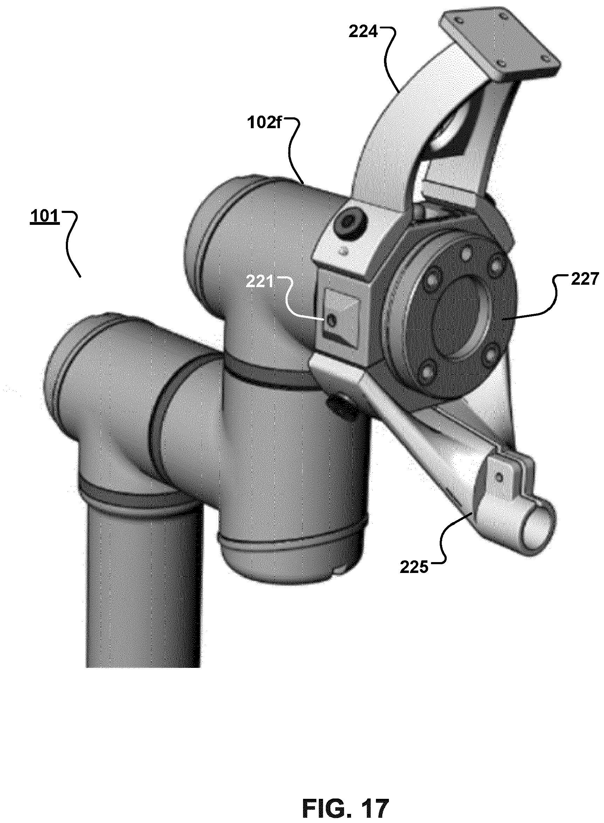

Fig. 17 shows part of arm 101 having a laser line scanner accessory connected to/mounted on an accessory mount 221, which is an accessory mount of the type described herein. The line scanner accessory is just an example of a type of accessory; any appropriate accessory can be connected to accessory mount 221. In this example, laser line scanner includes two parts 224 and 225 that are each connected to two different structures (covered in the figure) of accessory mount 221 in the manner described herein. This example also shows a second end effector interface 227 of the type described above connected to the accessory mount and for enabling connection to an end effector while the laser line scanner is also connected to the accessory mount. The laser line scanner may rotate with the accessory mount, which rotates with joint 102f and moves along with movement of arm 101 as described herein, thereby enabling precise positioning of the laser scanner relative to a target.

In some implementations, the accessory mount may be used as connection points along the length of a robot for wires, leads, tubing, and/or pressure vessels, for example, that are usable with the robot. For example, wires may extend along the length of the robot. The wires may be held by an accessory on the accessory mount in such a manner that enables the wires to move along with movement of the robot, but also keeps the wires relatively organized, thereby reducing the chances of disconnections. The same may be true for the leads, tubing, and/or pressure vessels.

The tapering and angling of the faces / sides of structures on the accessory mounts described herein facilitates connection to the accessories and/or supports therefor. The receptacles on the accessories or supports may register off of a face/side of the structure. For example, the accessory's receptacle may contact the face/side of the structure and slide downward along the face/side of the structure to complete the connection between the receptacle and the accessory mount. Because the face/side of the structure is tapered and angled, the alignment between the accessory and the structure need not be precise in order to make a connection. In other words, the tapering and angling is relatively forgiving in that errors in alignment will not prevent the accessory and the structure from making a connection.

The accessory mount is advantageous in that it enables one or multiple accessories to be mounted onto a robot, such arm 101, at various points along the length of the robot. For example, both a camera and a light may be mounted on the accessory mount adjacent to the tool flange. The lighting and camera may be controlled to improve the resulting images. In another example, an accessory mount proximate to a tool flange may hold both a gripper and a video camera. The feed from the video camera may be used to achieve more precise control over the gripper. Any appropriate combination of accessories may thus be mounted at any location on the robot.

The accessory mounting system described herein is not limited to use on a robotic-arm-type robot, such as arm 101. For example, the accessory mounting system may be incorporated into an autonomous vehicle robot of the type that is the subject of U.S. Patent No. 11,287,824 (issued March 29, 2022), and which is described with respect to Figs. 1, 2, and 3 thereof. The contents of U.S. Patent No. 11,287,824 relating to the description of the autonomous vehicle are incorporated herein by reference. In another example, the accessory mounting system may be incorporated into an autonomous vehicle robot of the type that is the subject of U.S. Patent Publication No. 2021/0349468 (published November 11, 2021), and which is described with respect to Figs. 1, 2, and 3 thereof. The contents of U.S. Patent Publication No. 2021/0349468 relating to the description of the autonomous vehicle are incorporated herein by reference.

The example robots, and components thereof, described herein can be controlled, at least in part, using one or more computer program products, e.g., one or more computer program tangibly embodied in one or more information carriers, such as one or more non-transitory machine-readable media, for execution by, or to control the operation of, one or more data processing apparatus, e.g., a programmable processor, a computer, multiple computers, and/or programmable logic components.

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a network.

Actions associated with implementing at least part of the robot can be performed by one or more programmable processors executing one or more computer programs to perform the functions described herein. At least part of the robot can be implemented using special purpose logic circuitry, e.g., an FPGA (field programmable gate array) and/or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only storage area or a random access storage area or both. Elements of a computer include one or more processors for executing instructions and one or more storage area devices for storing instructions and data. Generally, a computer will also include, or be operatively coupled to receive data from, or transfer data to, or both, one or more machine-readable storage media, such as mass storage devices for storing data, e.g., magnetic, magneto-optical disks, or optical disks. Machine-readable storage media suitable for embodying computer program instructions and data include all forms of nonvolatile storage area, including by way of example, semiconductor storage area devices, e.g., EPROM, EEPROM, and flash storage area devices; magnetic disks, e.g., internal hard disks or removable disks; magneto-optical disks; and CD-ROM and DVD-ROM disks.

The following paragraphs recite potential claims.
1. A system comprising: an apparatus (i) configured for connection to a robot or (ii) integrated into the robot, the apparatus comprising: at least one structure configured for connection to one or more corresponding accessories, where the at least one structure comprises (i) a protrusion that extends outwardly relative to a surface associated with the robot or (ii) an indentation that extends inwardly relative to the surface associated with the robot, the at least one structure comprising one or more faces that are tapered such that each of the one or more faces decreases in width farther away from the surface associated with the robot.
2. The system of embodiment 1, wherein the robot comprises an end effector interface configured to connect to an end effector and where the at least one structure is adjacent to the end effector interface.
3. The system of any preceding embodiment, wherein at least one structure comprises a protrusion that is configured to mate to a feature on an accessory among the accessories.
4. The system of any one of embodiments 1-3, wherein at least one structure comprises an indentation that is configured to mate to a feature on an accessory among the accessories.
5. The system of any one of embodiments 1-4, wherein at least one structure comprising the protrusion has a pyramidal shape.
6. The system of embodiment 5, wherein the pyramidal shape comprises three or more faces.
7. The system of any one of embodiments 1-6, wherein at least one of the structures is integrated into the robot as a part of a link or a joint of robot.
8. The system of any one of embodiments 1-7 wherein at least one structure comprises an indentation having an inverse pyramidal shape.
9. The system of embodiment 8, wherein the inverse pyramidal shape comprises three or more faces.
10. The system of any preceding embodiment, wherein each of the structures comprises (i) a protrusion that extends outwardly from a surface associated with the robot or (ii) an indentation that extends inwardly relative to the surface associated with the robot, and wherein each of the structures comprises faces that are tapered such that each of the faces decreases in width farther away from the surface associated with the robot.
11. The system of any one of embodiments 1-10, wherein the apparatus is configured for connection to the robot, the apparatus comprising a collar that fits around at least part of the robot, the collar comprising at least one of the structures.
12. The system of embodiment 11, wherein the collar comprises multiple parts, each of the multiple parts comprising an interface for connection to another one of the multiple parts.
13. The system of any one of embodiments 1-10, wherein the robot comprises a first end effector interface configured to connect to an end effector; wherein the apparatus comprises a connection interface configured to connect to the end effector interface; and wherein the apparatus comprises a second end effector interface having a same configuration as the first end effector interface, the second end effector interface being on a different surface of the apparatus than the connection interface.
14. The system of embodiment 13, wherein the second end effector interface is on an opposite surface of the apparatus than the connection interface.
15. The system of any preceding embodiment, wherein the apparatus is a first apparatus, the structures are first structures, the accessories are first accessories, the surface associated with the robot is a first surface, and the one or more faces are first faces; and wherein the system comprises one or more additional apparatus (i) configured for connection to the robot or (ii) integrated into the robot, the one or more additional apparatus each comprising: second structures configured for connection to one or more corresponding second accessories, each of the second structures comprising (i) a protrusion that extends outwardly relative to a second surface associated with the robot or (ii) an indentation that extends inwardly relative to the second surface associated with the robot, each of the second structures comprising one or more second faces that are tapered such that each of the one or more second faces decreases in width farther away from the second surface associated with the robot.
16. The system of embodiment 15, wherein the one or more additional apparatus are (i) configured for connection to (ii) or integrated into one or more respective robot links, the one or more respective robot links being different from a robot links adjacent to the end effector interface.
17. The system of any preceding embodiment, wherein the apparatus is rotatable based on rotation of a robot joint.
18. The system any preceding embodiment, wherein the apparatus is three-dimensionally (3D) printed, die-cast, or machined.
19. A robotic system comprising: a robot; and an apparatus (i) configured for connection to the robot or (ii) integrated into the robot, the apparatus comprising structures configured for connection to one or more corresponding accessories, each of the structures comprising (i) a protrusion that extends outwardly relative to a surface associated with the robot or (ii) an indentation that extends inwardly relative to the surface associated with the robot, and each of the structures comprising one or more faces that are tapered such that each of the one or more faces decreases in width farther away from the surface associated with the robot.
20. The robotic system of embodiment 19, wherein the accessories comprise one or more of: a mechanical gripper, a vacuum gripper, a magnetic gripper, a screwing machine, a reverse screwing machine, welding equipment, gluing equipment, a liquid or solid dispensing system, painting equipment, a visual system, a camera, a scanner, a wire holder, a tubing holder, a belt feeder, or polishing equipment.
21. The robotic system of embodiments 19 or 20, wherein the robot comprises a robotic arm, the robotic arm comprising: a base; an end effector; an accessory included among the accessories, the accessory being connected to one or more of the structures; and links or joints between the base and the end effector, an instance of the apparatus being connected to, or integrated into, at least one of the links or joints.
22. The robotic system of embodiments 19 to 21, wherein the accessory is a first accessory and the robotic system further comprises a second structure that attaches to the first accessory to enable stacking a second accessory on the first accessory, the second structure having a pyramidal shape comprised of tapered faces.
23. The robotic system of embodiments 19 to 22, wherein ones of the links or joints each comprise at least one of the apparatus.

Elements of different implementations described herein may be combined to form other implementations not specifically set forth above. Elements may be left out of the structures described herein without adversely affecting their operation. Furthermore, various separate elements may be combined into one or more individual elements to perform the functions described herein.

### EMBODIMENTS

Although the present invention is defined in the attached claims, it should be understood that the present invention can also (alternatively) be defined in accordance with the following embodiments:
1. A system comprising:
   an apparatus (i) configured for connection to a robot or (ii) integrated into the robot, the apparatus comprising:
   at least one structure configured for connection to one or more corresponding accessories, the at least one structure comprising (i) a protrusion that extends outwardly relative to a surface associated with the robot or (ii) an indentation that extends inwardly relative to the surface associated with the robot, the at least one structure comprising one or more faces that are tapered such that each of the one or more faces decreases in width farther away from the surface associated with the robot.
2. The system of embodiment 1, wherein the robot comprises an end effector interface configured to connect to an end effector and where the at least one structure is adjacent to the end effector interface.
3. The system of embodiment 1, wherein the at least one structure comprises a protrusion that is configured to mate to a feature on an accessory among the accessories.
4. The system of embodiment 1, wherein the at least one structure comprises an indentation that is configured to mate to a feature on an accessory among the accessories.
5. The system of embodiment 1, wherein the apparatus is configured for connection to the robot, the apparatus comprising a collar that fits around at least part of the robot, the collar comprising the at least one structure.
6. The system of embodiment 5, wherein the collar comprises multiple parts, each of the multiple parts comprising an interface for connection to another one of the multiple parts.
7. The system of embodiment 1, wherein the at least one structure comprising the protrusion has a pyramidal shape.
8. The system of embodiment 7, wherein the pyramidal shape comprises three or more faces.
9. The system of embodiment 1, wherein the apparatus is integrated into the robot such that the at least one structure is part of a link or joint included in the robot.
10. The system of embodiment 1, wherein the at least one structure comprising the indentation has an inverse pyramidal shape.
11. The system of embodiment 10, wherein the inverse pyramidal shape comprises three or more faces.
12. The system of embodiment 1, wherein the robot comprises a first end effector interface configured to connect to an end effector;
   wherein the apparatus comprises a connection interface configured to connect to the end effector interface; and
   wherein the apparatus comprises a second end effector interface having a same configuration as the first end effector interface, the second end effector interface being on a different surface of the apparatus than the connection interface.
13. The system of embodiment 12, wherein the second end effector interface is on an opposite surface of the apparatus than the connection interface.
14. The system of embodiment 1, wherein the at least one structure comprises multiple structures, each of the structures comprises (i) a protrusion that extends outwardly from a surface associated with the robot or (ii) an indentation that extends inwardly relative to the surface associated with the robot, and wherein each of the structures comprises faces that are tapered such that each of the faces decreases in width farther away from the surface associated with the robot.
15. The system of embodiment 1, wherein the apparatus is a first apparatus, the at least one structure comprises first structures, the accessories are first accessories, the surface associated with the robot is a first surface, and the one or more faces are first faces; and
   wherein the system comprises one or more additional apparatus (i) configured for connection to the robot or (ii) integrated into the robot, the one or more additional apparatus each comprising:
   second structures configured for connection to one or more corresponding second accessories, each of the second structures comprising (i) a protrusion that extends outwardly relative to a second surface associated with the robot or (ii) an indentation that extends inwardly relative to the second surface associated with the robot, each of the second structures comprising one or more second faces that are tapered such that each of the one or more second faces decreases in width farther away from the second surface associated with the robot.
16. The system of embodiment 15, wherein the one or more additional apparatus are (i) configured for connection to (ii) or integrated into one or more respective robot links or joints, the one or more respective robot links or joints being different from a robot link or joint adjacent to the end effector interface.
17. The system of embodiment 1, wherein the apparatus is rotatable based on rotation of a robot joint.
18. The system of embodiment 1, wherein the apparatus is three-dimensionally (3D) printed, die-cast, or machined.
19. A robotic system comprising:
   a robot; and
   an apparatus (i) configured for connection to the robot or (ii) integrated into the robot, the apparatus comprising one or more structures configured for connection to one or more corresponding accessories, each of the one or more structures comprising (i) a protrusion that extends outwardly relative to a surface associated with the robot or (ii) an indentation that extends inwardly relative associated with the surface associated with the robot, and each of the one or more structures comprising one or more faces that are tapered such that each of the one or more faces decreases in width farther away from the surface associated with the robot.
20. The robotic system of embodiment 19, wherein the one or more corresponding accessories comprises one or more of: a mechanical gripper, a vacuum gripper, a magnetic gripper, a screwing machine, a reverse screwing machine, welding equipment, gluing equipment, a liquid or solid dispensing system, painting equipment, a visual system, a camera, a scanner, a wire holder, a tubing holder, a belt feeder, or polishing equipment.
21. The robotic system of embodiment 19, wherein the robot comprises a robotic arm, the robotic arm comprising:
   a base;
   an end effector;
   an accessory included among the accessories, the accessory being connected to one or more of the structures; and
   links or joints between the base and the end effector, an instance of the apparatus being connected to, or integrated into, at least one of the links or joints.
22. The robotic system of embodiment 21, wherein the accessory is a first accessory and the robotic system further comprises a second structure that attaches to the first accessory to enable stacking a second accessory on the first accessory, the second structure having a pyramidal shape comprised of tapered faces.
23. The robotic system of embodiment 19, wherein ones of the links each comprise at least one of the apparatus.

## Claims

1. A system comprising:
an apparatus i) configured for connection to a robot or ii) integrated into the robot, the apparatus comprising:
a structure configured for connection to one or more corresponding accessories, the structure comprising i) a protrusion that extends outwardly relative to a surface associated with the robot or ii) an indentation that extends inwardly relative to the surface associated with the robot, the structure comprising one or more faces that are tapered such that each of the one or more faces decreases in width farther away from the surface associated with the robot.

2. The system of claim 1, wherein the robot comprises an end effector interface configured to connect to an end effector and where the structure is adjacent to the end effector interface.

3. The system of claim 1 or 2, wherein the structure comprises either:
a protrusion that is configured to mate to a feature on an accessory among the accessories; or
an indentation that is configured to mate to a feature on an accessory among the accessories.

4. The system of any preceding claim, wherein the apparatus is configured for connection to the robot, the apparatus comprising a collar that fits around at least part of the robot, the collar comprising the structure, and
optionally wherein the collar comprises multiple parts, each of the multiple parts comprising an interface for connection to another one of the multiple parts.

5. The system of claim 1, wherein the structure comprising the protrusion has a pyramidal shape, for example, wherein the pyramidal shape comprises three or more faces.

6. The system of any preceding claim, wherein the apparatus is integrated into the robot such that the structure is part of a link or joint included in the robot.

7. The system of claim 1, wherein the structure comprising the indentation has an inverse pyramidal shape, for example, wherein the inverse pyramidal shape comprises three or more faces.

8. The system of any preceding claim, wherein the robot comprises a first end effector interface configured to connect to an end effector;
wherein the apparatus comprises a connection interface configured to connect to the end effector interface; and
wherein the apparatus comprises a second end effector interface having a same configuration as the first end effector interface, the second end effector interface being on a different surface of the apparatus than the connection interface, and
optionally wherein the second end effector interface is on an opposite surface of the apparatus than the connection interface.

9. The system of any preceding claim, wherein the structure comprises multiple structures, each of the structures comprises i) a protrusion that extends outwardly from a surface associated with the robot or ii) an indentation that extends inwardly relative to the surface associated with the robot, and wherein each of the structures comprises faces that are tapered such that each of the faces decreases in width farther away from the surface associated with the robot.

10. The system of any preceding claim, wherein the apparatus is a first apparatus, the structure comprises first structures, the accessories are first accessories, the surface associated with the robot is a first surface, and the one or more faces are first faces; and
wherein the system comprises one or more additional apparatus i) configured for connection to the robot or ii) integrated into the robot, the one or more additional apparatus each comprising:
second structures configured for connection to one or more corresponding second accessories, each of the second structures comprising i) a protrusion that extends outwardly relative to a second surface associated with the robot or ii) an indentation that extends inwardly relative to the second surface associated with the robot, each of the second structures comprising one or more second faces that are tapered such that each of the one or more second faces decreases in width farther away from the second surface associated with the robot, and
optionally wherein the one or more additional apparatus are i) configured for connection to ii) or integrated into one or more respective robot links or joints, the one or more respective robot links or joints being different from a robot link or joint adjacent to the end effector interface.

11. The system of any preceding claim, wherein the apparatus is rotatable based on rotation of a robot joint.

12. The system of any preceding claim, wherein the apparatus is three-dimensionally 3D) printed, die-cast, or machined.

13. The robotic system of any preceding claim, wherein the one or more corresponding accessories comprises one or more of: a mechanical gripper, a vacuum gripper, a magnetic gripper, a screwing machine, a reverse screwing machine, welding equipment, gluing equipment, a liquid or solid dispensing system, painting equipment, a visual system, a camera, a scanner, a wire holder, a tubing holder, a belt feeder, or polishing equipment.

14. The robotic system of any preceding claim, wherein the robot comprises a robotic arm, the robotic arm comprising:
a base;
an end effector;
an accessory included among the accessories, the accessory being connected to one or more of the structures; and
links or joints between the base and the end effector, an instance of the apparatus being connected to, or integrated into, at least one of the links or joints, and
optionally wherein the accessory is a first accessory and the robotic system further comprises a second structure that attaches to the first accessory to enable stacking a second accessory on the first accessory, the second structure having a pyramidal shape comprised of tapered faces.
